# EUROPÄISCHE PATENTANMELDUNG

(11) **EP 4 450 329 A1**
(43) Veröffentlichungstag der Anmeldung: **23.10.2024**
(21) Anmeldenummer: 24169982.6
(22) Anmeldetag: 12.04.2024
(51) Int. Cl.: B60Q 1/12, B62J 6/023

(54) **SCHEINWERFERSYSTEM FÜR EIN FAHRZEUG**

(30) Priorität: 19.04.2023 DE 102023109916
(71) Anmelder: Küster Holding GmbH, 35630 Ehringshausen (DE)
(72) Erfinder: HORST, Dirk, 35398 Gießen (DE); SCHMIDT, Thomas, 35630 Ehringshausen (DE); BLÜCHER, Martin, 35630 Ehringshausen (DE); KORNRUMPF, Christian, 35649 Bischoffen (DE); OBERPICHLER, Frank, 35435 Wettenberg (DE)
(74) Vertreter: Weckenbrock, Matthias

(57) **Zusammenfassung**

Scheinwerfersystem (40) für ein durch eine Bedienperson geführtes Fahrzeug, umfassend
einen steuerbaren und einstellbaren Scheinwerfer (44) zum Ausstrahlen eines Lichtstrahls;
eine Auswertungseinheit (41);
eine Ausrichtungseinheit (42), mittels der der einstellbare Scheinwerfer (44) in wenigstens einer Richtung um einen Einstellwinkel drehbar und/oder schwenkbar verstellbar ist;
eine Blickerfassungseinrichtung (33) ausgebildet ist, welche die Blickrichtung der Bedienperson erfasst, und
eine Lageerfassungseinrichtung (35) zur Erfassung der Lage des Fahrzeuges, wobei die Auswertungseinheit (41) derart konfiguriert ist, dass sie aufgrund der erfassten Blickrichtung und/oder der erfassten Lage wenigstens ein Signal zum Steuern des Scheinwerfers (44) erzeugt und an die Ausrichtungseinheit (42) übermittelt, wobei die Ausrichtungseinheit (42) konfiguriert ist, den Scheinwerfer (44) aufgrund dieses wenigstens eines Signals auszurichten,
und wobei die Auswertungseinheit (41) derart konfiguriert ist, dass sie das wenigstens eine Signal aufgrund der erfassten Lage und der erfassten Blickrichtung derart erzeugt, dass der Scheinwerfer (44) in einen in Bezug auf die Lage des Fahrzeuges vorgegebenen Raumwinkel nicht leuchtet.

## Beschreibung

Die Erfindung betrifft ein Scheinwerfersystem nach dem Oberbegriff des Anspruchs 1. Sie betrifft weiterhin Sie betrifft weiterhin eine Vorrichtung zur Ausleuchtung des Fahrweges, sowie ein Zweirad und ein Verfahren zur Steuerung eines Scheinwerfers eines Fahrzeugs.

Fahrsituationsabhängiges Kurvenlicht ist in Kraftfahrzeugen zum Standard geworden und sorgt für einen Zugewinn an Sicherheit. Das Kurvenlicht kann in Abhängigkeit von einem gefahrenen Kurvenradius, einer Gierrate oder einer Querbeschleunigung des Fahrzeugs gesteuert werden oder mit einem Navigationssystem gekoppelt sein, welches Vorhersagen über die Art des befahrenen Fahrwegs erlaubt.

Bei Fahrrädern sind überwiegend fest montierte Scheinwerfer montiert. Die Nachteile rahmenfester Frontscheinwerfer sind insbesondere, dass das angestellte Licht des Scheinwerfers beim Einleiten einer Kurvenfahrt noch weiter geradeaus ausgestrahlt wird, sodass die Zielrichtung nicht ausgeleuchtet wird. Nachteilig bei gabelfesten bzw. lenkerfesten Frontscheinwerfern bei Fahrzeugen, wie Fahrrädern oder E-Bikes, ist, dass der Scheinwerfer tangential zum Kurvenbogen leuchtet. Die Zielrichtung wird nicht ausgeleuchtet. Bei kleinen Lenkbewegungen ist die Bewegung des Scheinwerferlichts sehr unruhig und störend und führt zu einem starken Blenden anderer Verkehrsteilnehmer.

Ein auf dem Helm des Fahrers montierter Scheinwerfer kann zwar die Zielrichtung gut ausleuchten, allerdings stört bei kleinen Kopfbewegungen, die sich ständig schnell ändernde Scheinwerferrichtung und es kommt zu einem starken Blenden anderer Verkehrsteilnehmer. Zusätzlich ist es nachteilig, dass das Gewicht des Scheinwerfers und des den Scheinwerfer mit elektrischer Energie versorgenden Akkus am Kopf des Fahrers mitgetragen werden muss.

Aus der DE 10 2005 036 002 A1 ist ein Scheinwerfersystem für ein durch eine Bedienperson geführtes Fahrzeug mit zumindest einem steuerbaren und einstellbaren Scheinwerfer zum Ausstrahlen eines blickrichtungsabhängigen Lichtstrahls bekannt, mit zumindest einer, mit dem einstellbaren Scheinwerfer verbundenen Verstelleinrichtung, mittels der der einstellbare Scheinwerfer verstellbar ist und mit einer Erfassungseinrichtung, die die Blickrichtung der Bedienperson erfasst.

Nachteilig bei bekannten Scheinwerfersystemen ist, dass die Hell-Dunkel-Grenze verletzt werden kann sodass insbesondere der Gegenverkehr geblendet werden kann.

Ausgehend von den zuvor beschriebenen Nachteilen liegt der Erfindung die Aufgabe zugrunde, ein robustes, zuverlässiges und präzises Scheinwerfersystem zur Steuerung eines Scheinwerfers anzugeben, bei welchem die Hell-Dunkel-Grenze nicht verletzt wird. Weiterhin sollen ein Zweirad und ein entsprechendes Verfahren bereitgestellt werden.

In Bezug auf das Scheinwerfersystem wird diese Aufgabe gelöst mit einem Scheinwerfersystem nach Anspruch 1. Erfindungsgemäß umfasst das Scheinwerfersystem einen steuerbaren und einstellbaren Scheinwerfer zum Ausstrahlen eines Lichtstrahls, eine Auswertungseinheit, eine Ausrichtungseinheit, mittels welcher der einstellbare Scheinwerfer in wenigstens einer Richtung um einen Einstellwinkel drehbar und/oder schwenkbar verstellbar ist, eine Blickerfassungseinrichtung, welche die Blickrichtung der Bedienperson erfasst, und eine Lageerfassungseinrichtung zur Erfassung der Lage des Fahrzeuges, wobei die Auswertungseinheit derart konfiguriert ist, dass sie aufgrund der erfassten Blickrichtung und/oder der erfassten Lage wenigstens ein Signal zum Steuern des Scheinwerfers erzeugt und an die Ausrichtungseinheit übermittelt, wobei die Ausrichtungseinheit konfiguriert ist, den Scheinwerfer aufgrund dieses wenigstens einen Signals auszurichten, und wobei die Auswertungseinheit derart konfiguriert ist, dass sie das wenigstens eine Signal aufgrund der erfassten Lage und der erfassten Blickrichtung derart erzeugt, dass der Scheinwerfer in einen in Bezug auf die Lage des Fahrzeuges vorgegebenen Raumwinkel nicht leuchtet. Der Raumwinkel bezeichnet insbesondere eine Hoch-Runterrichtung bzw. einen Bereich, sodass der Scheinwerfer nicht blendet.

Vorteilhafte Ausgestaltungen der Erfindung sind Gegenstand der Unteransprüche.

Die Erfindung geht von der Überlegung aus, dass auch für Fahrradfahrer und E-Bike-Fahrer die Ausleuchtung der Fahrbahn, insbesondere beim Abbiegen sehr wichtig ist. Radwege sind oft in schlechtem Zustand, Kurvenradien sind sehr viel enger als antizipiert werden kann, und die Wege sind schlecht ausgeleuchtet. Im Vergleich zur Landstraße fehlt in der Regel die weiße Leitlinie am Fahrbahnrand. Wegweiser auf Radwegen (weiße Schildchen mit grüner Aufschrift) sind in einer Höhe angebracht, die es dem Fahrer unmöglich macht, sie mit einer herkömmlichen Fahrrad-Frontlampe lesen zu können.

Bei einer Einstellung des Scheinwerfers muss aber darauf geachtet werden, dass die Hell-Dunkel-Grenze nicht verletzt wird, Dies bedeutet insbesondere, dass der Gegenverkehr nicht geblendet werden darf.

Wie nunmehr erkannt wurde, lässt sich eine verbesserte Steuerung eines Scheinwerfers unter Beachtung der Hell-Dunkel-Grenze realisieren, indem unter Berücksichtigung der Fahrzeuglage und der Blickrichtung der Scheinwerfer so angesteuert wird, dass der Lichtstrahl bzw. Scheinwerferstrahl nicht in einen vorgegebenen Raumwinkel leuchtet. Der Scheinwerfer wird also gewissermaßen der Blickrichtung soweit nachgesteuert wie möglich, ohne dass die Hell-Dunkel-Grenze verletzt wird. Eine derartige Korrektur aufgrund der Schräglage ist insbesondere im Bereich von Schräglage bis +/- 15° vorteilhaft.

Vorteilhafterweise wird bei der Erfassung der Lage die seitliche Neigung des Fahrzeugs erfasst. Die (seitliche) Neigung bzw. der Neigungswinkel, also eine Neigung quer zur Fahrtrichtung sorgt dafür, dass der Scheinwerfer in das Kurvenäußere anders hineinleuchtet, als wenn sich das Fahrzeug nicht seitlich neigen würde. Die seitliche Neigung ist somit besonders relevant für die Ansteuerung des Scheinwerfers. In einer bevorzugten Ausführungsform ist die Erfassung der Lage ausschließlich die Erfassung der seitlichen Neigung bzw. Neigung.

Zur Erfassung der Lage umfasst die Lageerfassungseinrichtung bevorzugt einen Mehrachsen Lagesensor bzw. 9-Achsen Sensor für Beschleunigung, Gyroskop und Magnetometer, auch bekannt als IMU Sensor (Inertial Measurement Unit).

Vorteilhafterweise erzeugt die Auswertungseinheit das wenigstens eine Signal derart, dass der der jeweilige Einstellwinkel, um den der Scheinwerfer in einer Richtung gedreht und/oder geschwenkt wird, wenigstens einen vorgegeben Schwellenwert nicht überschreitet, und wobei dieser Schwellenwert von der erfassten seitlichen Neigung des Fahrzeugs abhängt. Je nachdem, wie stark sich das Fahrzeug neigt, kann auf diese Weise der Winkel, um den der Scheinwerfer maximal gedreht bzw. geschwenkt werden, begrenzt werden. Je stärker sich das Fahrzeug neigt, umso stärker fällt diese Begrenzung des Winkels aus.

In einer bevorzugten Ausführungsform umfasst die Ausrichtungseinheit einen Reflektor und einen Aktuator zum Verdrehen des Reflektors, und wobei die Auswertungseinheit das wenigstens eine Signal derart erzeugt, den Reflektor in Abhängigkeit von der erfassten seitlichen Neigung des Fahrzeugs zu verdrehen. In dieser Ausführung wird somit nicht der Winkelbereich begrenzt, sondern es erfolgt aktiv eine Korrektur des Lichtstrahls mit Hilfe des Reflektors. In einer bevorzugten Ausführung wird der Reflektor im Scheinwerfergehäuse gedreht bzw. bewegt. Alternativ kann auch der Scheinwerfer gedreht werden. Auch eine Kombination aus beidem ist möglich.

Die Auswertungseinheit erzeugt das wenigstens eine Signal bevorzugt derart, dass bei einer erfassten seitlichen Neigung des Fahrzeugs in eine Richtung nach links oder rechts und einer erfassten Blickrichtung in die entgegengesetzte Richtung der Aktuator den Reflektor derart ansteuert, dass der Reflektor den Lichtstrahl des Scheinwerfers um einen vorgegebenen Winkel nach unten ablenkt. Auf diese Weise wird eine Verletzung der Hell-Dunkel-Grenze verhindert. Der Winkel, um den der Reflektor den Strahl ablenkt, hängt bevorzugt von der erfassten Neigung des Fahrzeugs und der Blickrichtung ab.

Die Auswertungseinheit erzeugt bevorzugt das wenigstens eine Signal derart, dass bei einer erfassten seitlichen Neigung des Fahrzeugs in eine Richtung nach links oder rechts und einer erfassten Blickrichtung in die gleiche Richtung der Aktuator den Reflektor derart ansteuert, dass der Reflektor den Lichtstrahl des Scheinwerfers um einen vorgegebenen Winkel nach oben ablenkt. Auf diese Weise kann die Kurve besser ausgeleuchtet werden.

Der vorgegebene Winkel hängt vorteilhafterweise jeweils von der erfassten seitlichen Lage ab. Das heißt insbesondere bevorzugt, dass durch den Reflektor der Strahl des Scheinwerfers umso mehr abgelenkt wird, umso mehr das Fahrzeug eine seitliche Neigung aufweist.

Die Ausrichtungseinheit ist vorzugsweise konfiguriert ist, den Scheinwerfer und/oder wenigstens ein Leuchtmittel des Scheinwerfers und/oder wenigstens einen Reflektor des Scheinwerfers zu verstellen.

In einer bevorzugten Ausführungsform weit die Blickerfassungseinrichtung eine Halterung für einen Helm auf, und/oder die Lageerfassungseinrichtung weist eine Halterung für einen Fahrradrahmen auf.

In einer bevorzugten Ausführungsform umfasst die Blickerfassungseinrichtung einen ersten Sensor und einen zweiten Sensor, wobei die Auswertungseinheit aus der Differenz der Sensorsignale des ersten Sensors und des zweiten Sensors und der erfassten Lage ein Signal zum Steuern und/oder Regeln des Scheinwerfers erzeugt.

Der jeweilige Sensor ist dabei vorteilhafterweise als Beschleunigungssensor oder Lagesensor oder Sensor für das Erdmagnetfeld ausgebildet ist.

Der Lagesensor bzw. Sensor zur Erfassung der seitlichen Neigung ist bevorzugt als ein Mehrachsen Lagesensor bzw. 9-Achsen Sensor für Beschleunigung, Gyroskop und Magnetometer, auch bekannt als IMU Sensor (Inertial Measurement Unit) ausgeführt.

Vorteilhafterweise weisen die Lageerfassungseinrichtung und die Blickerfassungseinrichtung jeweils eine Sende- und/oder Empfangseinheit zur drahtlosen Kommunikation, insbesondere mittels BLE (Bluetooth Low Energy), auf. In weiteren vorteilhaften Ausbildungen kann statt BLE beispielsweise auch ANT(+), ZigBee/RF4CE, RFM, WiFi verwendet werden oder ein vergleichbarer drahtloser Übertragungsstandard. Diese Kommunikationsformen weisen die notwendige Reichweite auf und verbrauchen gleichzeitig wenig Energie, sodass ein Batterie- bzw. Akkuwechsel nur selten erfolgen muss. Denkbar ist auch ein Übertragungsstandard für höhere Reichweiten auf Kosten des Energiebedarfs.

In einer bevorzugten Ausführungsform der Erfindung erzeugt die Auswertungseinheit aus der Differenz erfassten Lage und der erfassten Blickrichtung der beiden erfassten Richtungen ein Signal zum Steuern des Scheinwerfers. Auf diese Weise können Fehler, welche durch die Bewegungsbeschleunigung der Lageerfassungseinrichtung entstehen, ausgeglichen werden.

Die Blickerfassungseinrichtung erfasst bevorzugt eine Richtung, beispielsweise eine Richtung, in der der Kopf einer Person gedreht ist. Die Blickerfassung ist hierbei die Erfassung der Kopfrichtung, wobei zusätzliche Bewegungen der Augen nach links oder rechts nicht erfasst werden.

In bevorzugten Ausführungsformen weist die Blickerfassungseinrichtung eine Halterung für eine Mütze oder Kappe, eine Brille oder einen Kopfhörer auf. In einer weiteren bevorzugten Ausführungsform weist die Blickerfassungseinrichtung eine Halterung auf, welche als Ohrbügel ausgebildet ist.

In einer bevorzugten Ausführungsform ist am Helm ein vorzugsweise leichtes Sensor- und Sendemodul angebracht, welches die absolute oder relative Lage und Richtung des Kopfes ermittelt und sendet. An einem Fahrrad ist, ggf. als Bestandteil der Lampe, ein weiteres Modul angebracht. Es beinhaltet einen Empfänger, der die Helmrichtung und Lage empfängt und einen weiteren Sensor, der Richtung und Lage des Scheinwerfers ermittelt. Aus diesen Lage- und Richtungsdaten wird die Richtung errechnet, in die der Scheinwerfer nachgesteuert werden muss. Die Steuerung erfolgt beispielsweise durch einen Stellaktuator im oder am Scheinwerfer.

Zur Bewegung des Scheinwerfers in einer Ebene wird bevorzugt eine Schwenkaktuatorik von Leuchtmittel und Reflektor realisiert. Alternativ zur Bewegung des gesamten Scheinwerfers kann auch die Bewegung nur des Reflektors oder die Ansteuerung verschiedener Lichtquellen, wie LEDs, möglich bzw. realisiert sein. Optional kann eine vertikale Bewegung in einer weiteren Bewegungsachse bedarfsgesteuert ausgeführt werden, um weit entfernte Ziele oder Verkehrsschilder besser auszuleuchten, vergleichbar mit dem Fernlicht bei Kraftfahrzeugen.

Die Kopfrichtung (Blickrichtung) des Fahrers wird bevorzugt von einem Sensor erfasst bzw. erkannt. Eine Elektronik wertet diese Richtung aus und verändert die Leuchtrichtung des Scheinwerfers entsprechend.

In einer bevorzugten Ausführungsform erzeugt die Auswertungseinheit nur dann das wenigstens eine Signal aufgrund der erfassten Lage und der erfassten Blickrichtung derart, dass der Scheinwerfer in einen in Bezug auf die Lage des Fahrzeuges vorgegebenen Raumwinkel nicht leuchtet, wenn die seitliche Neigung des Fahrzeugs und die Blickrichtung entgegengesetzt sind in Bezug auf die Seite links oder rechts. Das bedeutet, dass diese Korrektur nur erfolgt, wenn die seitliche Neigung des Fahrzeuges nach links ist und die Blickrichtung nach rechts oder wenn die seitliche Neigung des Fahrzeugs nach rechts ist und die Blickrichtung nach links. Dabei ist insbesondere zur Frage, ob die Korrektur überhaupt erfolgt, eine binäre Entscheidung vorgesehen, bei der die Winkel der seitlichen Neigung und der Blickrichtung nicht berücksichtigt. Mit anderen Worten: eine Begrenzung mit Hilfe von Schwellenwerten erfolgt nicht, wenn die Fahrtrichtung des Fahrzeugs und damit die seitliche Neigung und die Blickrichtung des Fahrers übereinstimmen, d.h., der Fahrer blickt in die Kurve, in die er fährt.

In Bezug auf die Vorrichtung wird die oben genannte Aufgabe erfindungsgemäß gelöst durch eine Vorrichtung zur Ausleuchtung des Fahrweges, umfassend einen Helm und umfassend ein oben beschriebenes Scheinwerfersystem, wobei die Blickerfassungseinrichtung am Helm befestigt ist.

Im Helm und an der Beleuchtungseinheit sind bevorzugt je ein Inertial-Sensor bzw. Beschleunigungssensor angebracht. Die Sensoren werden vorteilhafterweise vor der Fahrt auf einen Drehwinkel Null kalibriert (Geradeaussehen und Lampe in Nullposition). Die Drehung um die z-Achse (Gier-Winkel, Heading) wird bei beiden Sensoren bevorzugt durch sensor fusion ermittelt. Der Lampen-Drehwinkel wird der Kopf-Drehwinkel nachgeführt. Dieser Gier-Winkel ist nicht bezogen auf die Fahrrad längsachse.

Die beiden Sensoren sind bevorzugt an zwei gegenüberliegenden Seiten des Helms, insbesondere in Bereichen, welche im aufgesetzten Zustand über den Ohren angeordnet sind, liegen, befestigt oder in dafür vorgesehenen Aufnahmen am Helm aufgenommen.

Die Berechnung des Kopf-Drehwinkels erfolgt dabei vorteilhafterweise aus den Bewegungsdaten des Kopfes, welche die beiden Sensoren am Helm liefern. Die Ermittlung erfolgt dabei bevorzugt mit zwei um 180° verschobenen Tangential- Beschleunigungswerten.

In einer vorteilhaften Variante davon ist ein Sensor an der Lampe bzw. dem Scheinwerfer angebracht, welcher, insbesondere ausschließlich, zur Bestimmung der Nominalstellung der Lampe bzw. des Scheinwerfers dient.

In Bezug auf das Zweirad wir die oben genannte Aufgabe erfindungsgemäß gelöst durch ein Zweirad mit einer oben beschriebenen Vorrichtung. Das Zweirad ist besonders bevorzugt ein Fahrrad, E-Bike, Pedelec, oder auch ein Kraftrad.

In Bezug auf das Verfahren wird die oben genannte Aufgabe erfindungsgemäß gelöst durch ein Verfahren zur Steuerung eines Scheinwerfers eines Fahrzeugs, wobei in Abhängigkeit von einer erfassten Lage und einer erfassten Blickrichtung der Scheinwerfer verdreht und/oder verschwenkt wird, und wobei in Abhängigkeit der Blickrichtung und der Lage des Fahrzeugs der Scheinwerfer derart orientiert wird, dass der Scheinwerfer in einen in Bezug auf die Lage des Fahrzeuges vorgegebenen Raumwinkel nicht leuchtet.

Die Lagerfassung umfasst vorteilhafterweise die Erfassung der seitlichen Neigung des Fahrzeugs oder beinhaltet nur die Erfassung der seitlichen Neigung des Fahrzeugs.

Die Vorteile der Erfindung liegen insbesondere darin, dass durch das oben beschriebene System eine präzise und robuste Steuerung eines Scheinwerfers unter Beachtung der Hell-Dunkel-Grenze ermöglicht wird, wodurch die Sicherheit der Verkehrsteilnehmer erhöht wird. Dadurch wird ein vorteilhaftes blickrichtungsabhängiges Kurvenlicht realisiert. Der Leuchtkegel wird nicht abhängig von der Lenkerstellung, sondern im Wesentlichen abhängig von der Blickrichtung gesteuert, wodurch ein Gewinn an Sicherheit erzielt wird. Eine Stirnlampe zum Abbiegen oder zum Lesen der Wegweiser / Beschilderung wird überflüssig.

### Darstellung der Erfindung

Weitere Ziele, Vorteile, Merkmale und Anwendungsmöglichkeiten der vorliegenden Erfindung ergeben sich aus der nachfolgenden Beschreibung eines Ausführungsbeispieles anhand der Zeichnung. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung. Dabei zeigen zum Teil schematisch:
- Figur 1: eine Lageerfassungseinrichtung, eine Ausrichtungseinheit und einen einstellbaren Scheinwerfer eines Systems in einer bevorzugten Ausführungsform in einer perspektivischen Darstellung,
- Figur 2: die Lageerfassungseinrichtung, die Ausrichtungseinheit und den einstellbaren Scheinwerfer gemäß Figur 1 in einer ersten Konfiguration in einer Draufsicht,
- Figur 3: die Lageerfassungseinrichtung, die Ausrichtungseinheit und den einstellbaren Scheinwerfer gemäß Figur 1 in einer zweiten Konfiguration in einer Draufsicht,
- Figur 4: die Lageerfassungseinrichtung, die Ausrichtungseinheit und den einstellbaren Scheinwerfer gemäß Figur 1 in einer explosiven Darstellung,
- Figur 5: einen Lampenträger in einer perspektivischen Darstellung,
- Figur 6: eine Blickerfassungseinrichtung in einer explosiven Darstellung,
- Figur 7: die an einem Helm montierte Blickerfassungseinrichtung gemäß Figur 6,
- Figur 8: ein Scheinwerfersystem mit Objektsteuer- und/oder-regelsystem mit einer Blickerfassungseinrichtung und einer Lageerfassungseinrichtung,
- Figur 9: ein Diagramm mit Regelbereichen des Scheinwerfers,
- Figur 10 a): eine Lageerfassungseinrichtung und eine Ausrichtungseinheit eines Scheinwerfersystems in einer bevorzugten Ausführungsform bei einer Geradeausfahrt,

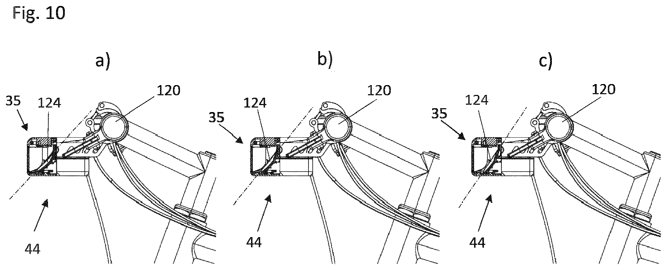

- Figur 10 b): die Lageerfassungseinrichtung und eine Ausrichtungseinheit eines Scheinwerfersystems in einer bevorzugten Ausführungsform bei einer Linkskurvenfahrt mit Blick in die Kurveninnenseite, und
- Figur 10 c): die Lageerfassungseinrichtung und eine Ausrichtungseinheit eines Scheinwerfersystems in einer bevorzugten Ausführungsform bei einer Linkskurvenfahrt mit Blick in die Kurvenaußenseite.

Gleiche oder gleichwirkende Bauteile werden in den nachfolgend dargestellten Figuren der Zeichnung anhand einer Ausführungsform mit Bezugszeichen versehen, um die Lesbarkeit zu verbessern.

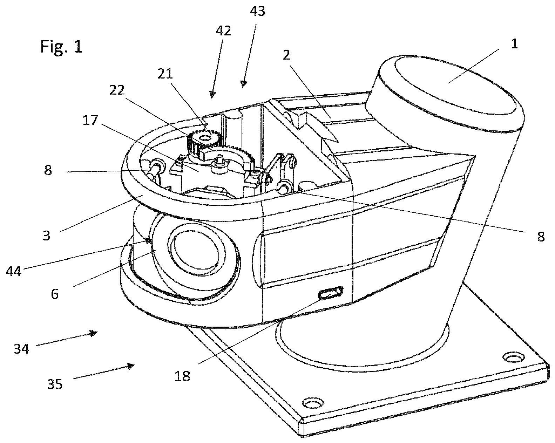

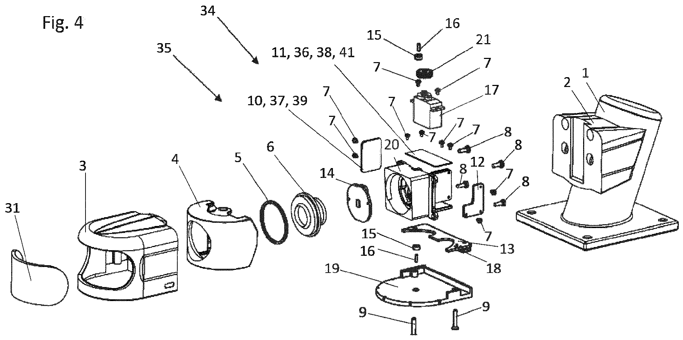

In den Figuren 1-4 ist ausschnittsweise ein Fahrradrahmen 1 dargestellt, an welchem ein Lampenträger 2 mit einem Gehäuse 3 befestigt ist. Die Figuren zeigen eine Lageerfassungseinrichtung 35. Diese umfasst ein Lampengehäuse 4, welches einen Ring 5 und eine Linse 6 aufnimmt. Das Gehäuse 3 nimmt an einer Vorderseite ein Glas 31 auf, welches als transparente Schutzblende dient.

Der Ring 5, die Linse 6 und eine LED-Platine 14 bilden einen Scheinwerfer 44 und sind in einem Träger 20 angeordnet, welcher mit einem Deckel 19 verschlossen wird. Zur Befestigung des Deckels 19 an dem Träger 20 dienen zwei Schrauben 9. In dem Träger 20 sind jeweils seitlich eine L-förmige Platine 12 sowie eine weitere Platine 10 angeordnet. Senkrecht dazu ist eine Platine 13 angeordnet. Auf der weiteren Platine 11 befinden sich ein Bluetooth Modul und ein Mikrocontroller. Die Platine 12 gehört zur Lampe und dient zur Ansteuerung einer optionalen Fernlichtfunktion. Auf der Platine 13 befinden sich die Komponenten für die Spannungsversorgung und ein Steckerkragen 18 zum Anschluss der Spannungsversorgung und als Serviceschnittstelle. Je nach Ausgestaltung ist es auch denkbar, dass Komponenten und Funktionen zusammengefasst werden und sich dadurch die Anzahl der Platinen reduziert.

Mittels eines Kugellagers 15 und eines Zylinderstiftes 16 ist der Träger 20 auf dem Deckel 19 drehbar befestigt. Dargestellt ist auch eine Ausrichtungseinheit 42, welche einen Servoantrieb 17 und ein Zahnrad 21 umfasst, welches mit einem Zahnradsegment 22 in Eingriff steht.

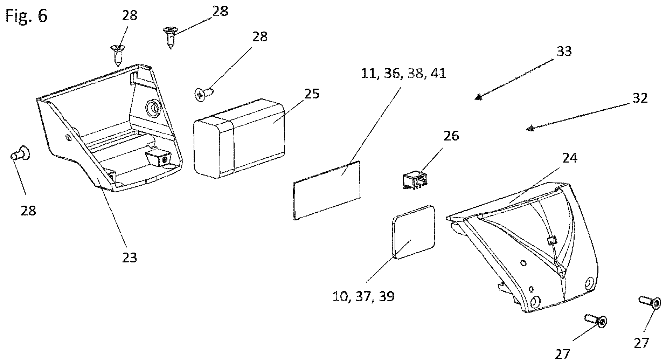

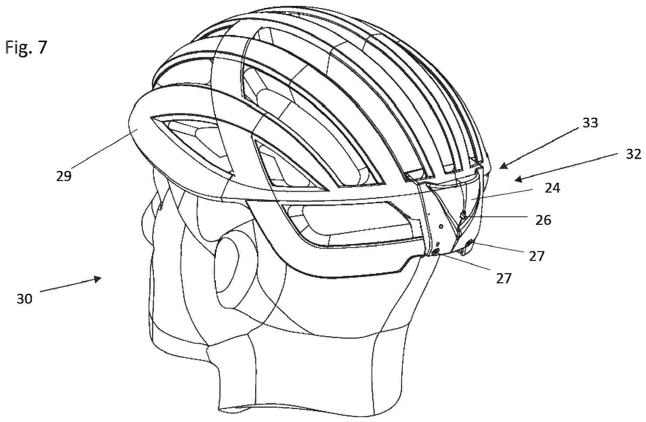

Die Lageerfassungseinrichtung 35 umfasst einen Sensor 39 zur Erfassung einer Richtung und eine Empfangseinheit 38 zur Kommunikation mit einer in den Figuren 6 und 7 dargestellten Blickerfassungseinrichtung 32. Der Sensor 39 nutzt vorliegend das Erdmagnetfeld zur Bestimmung einer azimutalen Richtung.

Mit Hilfe von Schrauben 7 wird der Servoantrieb 17 auf der Platine 11 verschraubt. Mit Hilfe von Schrauben 8 wird der Träger 20 am Gehäuse 3 verschraubt. Mit Hilfe der Empfangseinheit 38 empfängt die Lageerfassungseinrichtung 35 ein Signal der Blickerfassungseinrichtung 32, welches eine Blickrichtung repräsentiert. Dieses Signal übermittelt die Empfangseinheit 38 an eine Auswertungseinheit 41, welche dieses Signal mit einem Signal des Sensors 38 vergleicht. Aus den beiden erfassten Richtungen bildet sie die Differenz und erzeugt daraus ein Signal für eine Ausrichtungseinheit 42, welche den Servoantrieb 17 und das Zahnrad 21 umfasst.

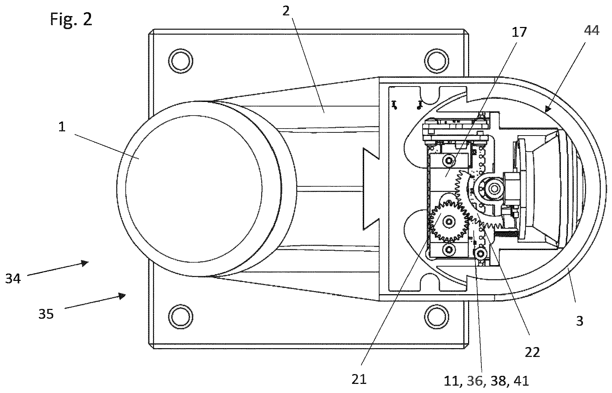

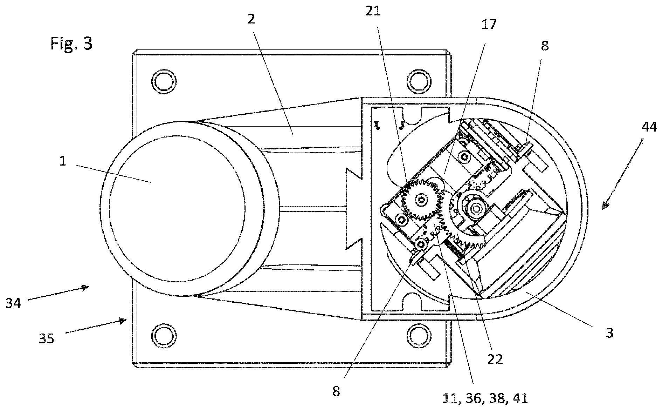

In der Figur 2 ist dargestellt, wie der Scheinwerfer 44 in eine Richtung geradeaus leuchtet. Die Figur 3 zeigt den Scheinwerfer 44 in einer dazu gedrehten Stellung, die ausgehend von der Geradeausstellung gemäß Figur 2 durch Aktivierung des Servoantriebs 17 erreicht wird.

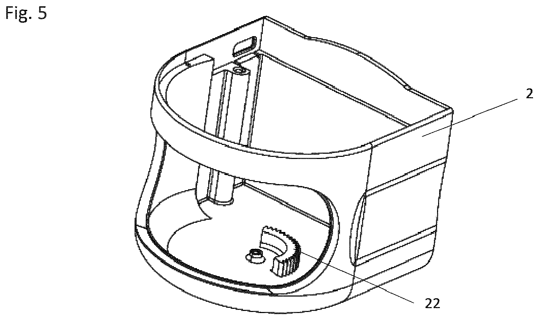

In Figur 5 ist der Lampenträger 2 dargestellt. Das Zahnradsegment 22 ist am Lampenträger 2 befestigt, sodass bei einer Betätigung des Servoantriebs 17 und Rotation des Zahnrads 21 durch den Eingriff des Zahnrads 21 mit dem Zahnradsegment 22 eine Rotation von Ring 5, Linse 6 und LED-Platine 14 erfolgt. Auf diese Weise kann die Richtung der Beleuchtung in einer Ebene, in der diese Komponenten rotieren, eingestellt werden.

In Figur 6 ist eine Blickerfassungseinrichtung 33 dargestellt. Sie umfasst ein Gehäuse 23 mit einem Deckel 24. Unter dem Deckel 24 ist ein Ein/AusSchalter 26 angeordnet.

Der Deckel 24 umfasst eine Öffnung, durch die ein Teil des Ein/Aus-Schalters 26 geführt ist, sodass er im montierten Zustand von außen betätigbar ist. Der Deckel 24 wird am Gehäuse mit zwei Schrauben 27 befestigt. Weitere Schrauben 28 dienen der der Befestigung der Blickerfassungseinrichtung 33 an einem Helm 29, siehe Figur 7.

Unter dem Deckel 24 ist ein Sensor 37 zur Lageerfassung bzw. Blickrichtung angeordnet, welcher das Erdmagnetfeld sensiert. Die Blickerfassungseinrichtung 33 umfasst weiterhin eine Batterie 25, die bevorzugt als Akku ausgebildet ist, und eine Sendeeinheit 36 zum drahtlosen Senden eines die Lage der Blickerfassungseinrichtung 33 bzw. des Helms 29 repräsentierenden Signals an die Blickerfassungseinrichtung 33. Die Blickerfassungseinrichtung 33 umfasst eine erste Platine 10 und eine zweite Platine 11. Die Platine 10 beinhaltet die Bewegungs- und Lagesensoren für die translatorische und/oder rotatorische Bewegungserfassung und die Erfassung des Erdmagnetfeldes.

In Figur 7 ist ein Kopf 30 einer Person schematisch dargestellt, auf dem ein Helm 29 aufgesetzt ist. An der Hinterseite des Helms 29 ist die Blickerfassungseinrichtung 33 angebracht. Wenn die Person den Kopf 30 in eine Richtung dreht, dreht sich in diese Richtung auch der Helm 29, sodass diese Richtung von der Blickerfassungseinrichtung 33 erfasst wird. Die Blickerfassung ist hierbei die Erfassung der Kopfrichtung, wobei zusätzliche Bewegungen der Augen nach links oder rechts vorliegend nicht erfasst werden.

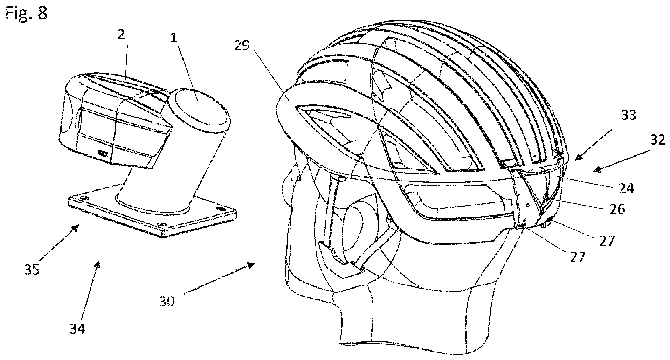

Die Figur 8 zeigt ein Scheinwerfersystem 40 mit der Blickerfassungseinrichtung 33 gemäß Figur 1 und der Lageerfassungseinrichtung 35 gemäß Figur 6.

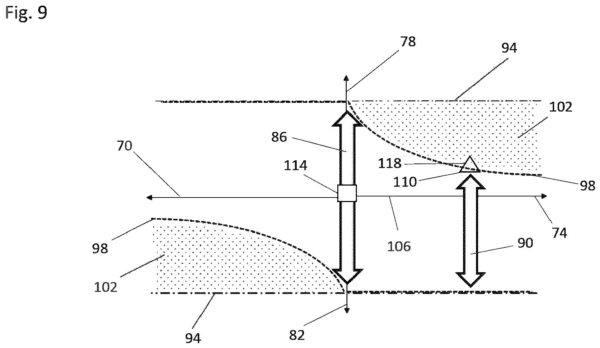

In Figur 9 ist ein Diagramm zur Erläuterung der Begrenzung des Scheinwerferwinkels für ein Scheinwerfersystem 40 für ein Fahrrad dargestellt. Dargestellt sind mit Pfeilen eine Fahrradneigung nach links 70 und eine Fahrradneigung nach rechts 74 sowie eine Scheinwerferdrehrichtung nach links 78 und eine Scheinwerferdrehrichtung nach rechts 82. Eine Nulllinie 106 entspricht dabei einer Geradeausstellung des Scheinwerfers 44, d.h. der Schwenkwinkel des Scheinwerfers 44 ist 0. Eine Geradeausfahrt wird durch einen ersten Doppelpfeil 86, eine Fahrt in einer Rechtskurve mit nach rechts geneigtem Fahrrad durch einen zweiten Doppelpfeil 90 dargestellt. Dargestellt sind ebenfalls ein geometrisch möglicher Schwenkbereich 94 des Scheinwerfers 44, eine Regelgrenze 98 und ein verbotener Bereich 102.

Wie in der Figur 9 erkennbar ist, steht bei einer Geradeausfahrt der gesamte möglich Schwenkbereich zur Verfügung. Das bedeutet, solange der Fahrer geradeaus fährt (repräsentiert durch den Doppelpfeil 86) und nach links oder rechts schaut, richtet die Ausrichtungseinheit 42 den Scheinwerfer 44 nach links oder rechts bis zu dem maximalen Winkel, mit dem sich der Scheinwerfer 44 drehen bzw. schwenken lässt, aus. Die Schwellenwerte für die Schwenkrichtung nach links und rechts entsprechen dabei den geometrisch möglichen maximalen Schwenkwerten.

In dem Fall, dass der Fahrer eine Rechtskurve fährt (repräsentiert durch den Doppelpfeil 90), steht bei der Blickrichtung nach rechts der maximale Schwenkbereich zur Verfügung. Bei der Blickrichtung nach links schwenkt die Ausrichtungseinheit 42 den Scheinwerfer 44 nur bis zur Regelgrenze 98. Der maximale Schwenkwinkel 110 für die beispielhafte Rechtskurve bei Blickrichtung nach links ist in der Figur 9 durch ein Dreieck dargestellt und liegt auf der Regelgrenze 98.

Wie aus der Figur 9 hervorgeht, ist die Regelgrenze 98 eine Funktion, die den maximalen Schwenkwinkel als Funktion der Fahrradneigung parametrisiert.

In der Figur 9 sind zwei Fahrzustände, nämlich ein erster Fahrzustand 114 und ein zweiter Fahrzustand 118, eingezeichnet.

Im ersten Fahrzustand 114 fährt das Fahrrad fährt geradeaus und hat damit keine Schräglage. Hier ist beispielhaft ein maximaler Schwenkwinkel des Leuchtkegels (Lampenreflektor) von +/- 40° möglich.

Der zweite Fahrzustand 118 entspricht einer Kurvenfahrt. Bei der Kurvenfahrt nach rechts wird von der Elektronik eine Fahrradneigung von ca. 10° erkannt. Wenn sich dann der Kopf des Fahrers bzw. der Helmsensor nach links dreht, wird der maximale Verstellwinkel des Lichtkegels von 40° auf ca. 10° begrenzt umso die Hell-Dunkelgrenze und damit die Regelgrenze 98 nicht zu überschreiten. Insgesamt gilt, dass der Schwenkwinkel umso mehr eingegrenzt werden muss, je steiler die Fahrradneigung ist.

In Figur 10 a) ist ein Fahrradlenker 120 dargestellt, an welchem eine Ausrichtungseinheit in einer bevorzugten Ausführungsform dargestellt ist. Die Ausrichtungseinheit 42 umfasst einen Reflektor 124 und einen Aktuator (nicht dargestellt), welcher den Reflektor 124 nach links und nach rechts drehen kann. Pro Achse wird je ein Aktuator verwendet.

In Figur 10 a) ist der Scheinwerfer 44 in einer Nominalstellung dargestellt. Der Reflektor 124 ist dabei in einer Nominalstellung, sodass das Licht ihn in gerader Richtung verlässt. Das bedeutet, dass bei einer Geradeausfahrt des Fahrrads der Scheinwerfer 44 in die Fahrtrichtung des Fahrrads leuchtet.

In Figur 10 b) ist eine Linkskurvenfahrt des Fahrrads mit Blick in die Kurveninnenseite dargestellt. Das heißt, während der Linkskurvenfahrt blickt der Fahrer in die Kurveninnenseite. Der Reflektor 124 korrigiert hierbei die Aussendung des Lichtstrahls nach oben. Auf diese Weise wird während der Schräglage die Ausleuchtung des Weges im Kurveninnern verbessert.

In Figur 10 c) ist eine Linkskurvenfahrt des Fahrrads mit Blick in die Kurvenaußenseite dargestellt. Das heißt, während der Linkskurvenfahrt blickt der Fahrer in die Kurvenaußenseite. Der Reflektor 124 korrigiert hierbei die Aussendung des Lichtstrahls nach unten, um die Verletzung der Hell-Dunkel-Grenze zu vermeiden. Durch die Korrekturen des Reflektors 124 wird eine Pitch-Funktion (Winkelverstellung bei Kurvenfahrten) bereitgestellt. Für jede Achse wird ein Aktuator verwendet, die den Reflektor 124 im Scheinwerfer bewegen.

### Bezugszeichenliste

- 1: Fahrradrahmen
- 2: Lampenträger
- 3: Gehäuse
- 4: Lampengehäuse
- 5: Ring
- 6: Linse
- 7: Schrauben
- 8: Schrauben
- 9: Schrauben
- 10: Platine
- 11: Platine
- 12: Platinen
- 13: Platinen
- 14: LED-Platine
- 15: Kugellager
- 16: Zylinderstift
- 17: Servoantrieb
- 18: Steckerkragen
- 19: Deckel
- 20: Träger
- 21: Zahnrad
- 22: Zahnradsegment
- 23: Gehäuse
- 24: Deckel
- 25: Batterie
- 26: Ein/aus-Schalter
- 27: Schraube
- 28: Schraube
- 29: Helm
- 30: Kopf
- 31: Glas
- 33: Blickerfassungseinrichtung
- 35: Lageerfassungseinrichtung
- 36: Sendeeinheit
- 37: Sensor
- 38: Empfangseinheit
- 39: Sensor
- 40: Scheinwerfersystem
- 41: Auswertungseinheit
- 42: Ausrichtungseinheit
- 44: Scheinwerfer
- 70: Fahrradneigung nach links
- 74: Fahrradneigung nach rechts
- 78: Scheinwerferdrehrichtung links
- 82: Scheinwerferdrehrichtung rechts
- 86: Doppelpfeil
- 90: Doppelpfeil
- 94: geometrisch möglicher Schwenkbereich
- 98: Regelgrenze
- 102: verbotener Bereich
- 106: Nulllinie
- 110: maximaler Schwenkwinkel
- 114: erster Fahrzustand
- 118: zweiter Fahrzustand
- 120: Fahrradlenker
- 124: Reflektor

## Patentansprüche

1. Scheinwerfersystem (40) für ein durch eine Bedienperson geführtes Fahrzeug, umfassend
• einen steuerbaren und einstellbaren Scheinwerfer (44) zum Ausstrahlen eines Lichtstrahls;
• eine Auswertungseinheit (41);
• eine Ausrichtungseinheit (42), mittels der der einstellbare Scheinwerfer (44) in wenigstens einer Richtung um einen Einstellwinkel drehbar und/oder schwenkbar verstellbar ist;
• eine Blickerfassungseinrichtung (33) ausgebildet ist, welche die Blickrichtung der Bedienperson erfasst, und
• eine Lageerfassungseinrichtung (35) zur Erfassung der Lage des Fahrzeuges,
wobei die Auswertungseinheit (41) derart konfiguriert ist, dass sie aufgrund der erfassten Blickrichtung und/oder der erfassten Lage wenigstens ein Signal zum Steuern des Scheinwerfers (44) erzeugt und an die Ausrichtungseinheit (42) übermittelt, wobei die Ausrichtungseinheit (42) konfiguriert ist, den Scheinwerfer (44) aufgrund dieses wenigstens einen Signals auszurichten,
und wobei die Auswertungseinheit (41) derart konfiguriert ist, dass sie das wenigstens eine Signal aufgrund der erfassten Lage und der erfassten Blickrichtung derart erzeugt, dass der Scheinwerfer (44) in einen in Bezug auf die Lage des Fahrzeuges vorgegebenen Raumwinkel nicht leuchtet.

2. Scheinwerfersystem (40) nach Anspruch 1, wobei bei der Erfassung der Lage die seitliche Neigung des Fahrzeugs erfasst wird.

3. Scheinwerfersystem (40) nach Anspruch 2, wobei die Auswertungseinheit (41) das wenigstens eine Signal derart erzeugt, dass der der jeweilige Einstellwinkel, um den der Scheinwerfer (44) in einer Richtung gedreht und/oder geschwenkt wird, wenigstens einen vorgegeben Schwellenwert nicht überschreitet, und wobei dieser Schwellenwert von der erfassten seitlichen Neigung des Fahrzeugs abhängt.

4. Scheinwerfersystem (40) nach Anspruch 2, wobei die Ausrichtungseinheit (42) einen Reflektor (124) und einen Aktuator zum Verdrehen des Reflektors (124) umfasst, und wobei die Auswertungseinheit (41) das wenigstens eine Signal derart erzeugt, dass es ausgebildet ist, den Reflektor (124) in Abhängigkeit von der erfassten seitlichen Neigung des Fahrzeugs zu Verdrehen.

5. Scheinwerfersystem (40) nach Anspruch 4, wobei die Auswertungseinheit (41) das wenigstens eine Signal derart erzeugt, dass bei einer erfassten seitlichen Neigung des Fahrzeugs in eine Richtung nach links oder rechts und einer erfassten Blickrichtung in die entgegengesetzte Richtung der Aktuator den Reflektor (124) derart ansteuert, dass der Reflektor (124) den Lichtstrahl des Scheinwerfers (44) um einen vorgegebenen Winkel nach unten ablenkt.

6. Scheinwerfersystem (40) nach Anspruch 5, wobei die Auswertungseinheit (41) das wenigstens eine Signal derart erzeugt, dass bei einer erfassten seitlichen Neigung des Fahrzeugs in eine Richtung nach links oder rechts und einer erfassten Blickrichtung in die gleiche Richtung der Aktuator den Reflektor (124) derart ansteuert, dass der Reflektor (124) den Lichtstrahl des Scheinwerfers um einen vorgegebenen Winkel nach oben ablenkt.

7. Scheinwerfersystem (40) nach Anspruch 5 oder 6, wobei der vorgegebene Winkel jeweils von der erfassten seitlichen Lage abhängt.

8. Scheinwerfersystem (40) nach einem der vorherigen Ansprüche, wobei die Ausrichtungseinheit (42) konfiguriert ist, den Scheinwerfer (44) und/oder wenigstens ein Leuchtmittel des Scheinwerfers (44) und/oder wenigstens einen Reflektor (124) des Scheinwerfers (44) zu verstellen.

9. Scheinwerfersystem (40 nach einem der vorherigen Ansprüche, wobei die Blickerfassungseinrichtung (33) eine Halterung für einen Helm (29) aufweist, und/oder wobei die Lageerfassungseinrichtung (35) eine Halterung für einen Fahrradrahmen (1) aufweist.

10. Scheinwerfersystem (40) nach einem der vorherigen Ansprüche, wobei die Blickerfassungseinrichtung (33) einen ersten Sensor und einen zweiten Sensor umfasst, und wobei die Auswertungseinheit (41) aus der Differenz der Sensorsignale des ersten Sensors und des zweiten Sensors und der erfassten Lage ein Signal zum Steuern und/oder Regeln des Scheinwerfers (44) erzeugt.

11. Scheinwerfersystem (40) nach Anspruch 10, wobei der jeweilige Sensor als Beschleunigungssensor oder Lagesensor oder Sensor (37) für das Erdmagnetfeld ausgebildet ist.

12. Scheinwerfersystem (40) nach einem der vorherigen Ansprüche und wobei die Auswertungseinheit (41) nur dann das wenigstens eine Signal aufgrund der erfassten Lage und der erfassten Blickrichtung derart erzeugt, dass der Scheinwerfer (44) in einen in Bezug auf die Lage des Fahrzeuges vorgegebenen Raumwinkel nicht leuchtet, wenn die seitliche Neigung des Fahrzeugs und die Blickrichtung entgegengesetzt sind, in Bezug auf die Seite links oder rechts.

13. Vorrichtung zur Ausleuchtung des Fahrweges, umfassend einen Helm (29) und umfassend ein Scheinwerfersystem (40) nach einem der vorherigen Ansprüche, wobei die Blickerfassungseinrichtung (33) am Helm (29) befestigt ist.

14. Vorrichtung nach Anspruch 13 mit einem Scheinwerfersystem (40) nach Anspruch 10 oder 11, wobei die beiden Sensoren an zwei gegenüberliegenden Seiten des Helms, insbesondere in Bereichen, welche im aufgesetzten Zustand über den Ohren angeordnet sind, liegen, befestigt sind oder in dafür vorgesehenen Aufnahmen am Helm aufgenommen sind.

15. Zweirad mit einer Vorrichtung nach Anspruch 13 oder 14.

16. Verfahren zur Steuerung eines Scheinwerfers eines Fahrzeugs, wobei in Abhängigkeit von einer erfassten Lage und einer erfassten Blickrichtung der Scheinwerfer verdreht und/oder verschwenkt wird, und wobei in Abhängigkeit der Blickrichtung und der Lage des Fahrzeugs der Scheinwerfer derart orientiert wird, dass der Scheinwerfer in einen in Bezug auf die Lage des Fahrzeuges vorgegebenen Raumwinkel nicht leuchtet.

17. Verfahren nach Anspruch 16, wobei die Lagerfassung die Erfassung der seitlichen Neigung des Fahrzeugs umfasst oder nur die Erfassung der seitlichen Neigung des Fahrzeugs beinhaltet.
